# EUROPÄISCHE PATENTANMELDUNG

(11) **EP 2 498 152 A1**
(43) Veröffentlichungstag der Anmeldung: **12.09.2012**
(21) Anmeldenummer: 11157236.8
(22) Anmeldetag: 07.03.2011
(51) Int. Cl.: G05B 15/02, G05B 19/042

(54) **Verfahren zur Steuerung eines Raumautomationssystems**

(71) Anmelder: SIEMENS AKTIENGESELLSCHAFT, 80333 München (DE)
(72) Erfinder: Balmer, Thomas, 6300, Zug (CH); Hammer, Jörg, 6331, Hünenberg (CH)

(57) **Zusammenfassung**

Ein Verfahren zur Steuerung eines Raumautomationssystems, mit einer Anordnung (2) zum optimierten Steuern oder Regeln mindestens einer Komfortgrösse in einem Raum (1) umfasst die Verfahrensschritte: ermitteln eines ersten Werts, der ein Mass für die Ausnutzung der eingesetzten Energie zum Halten der Komfortgrösse in dem für die Komfortgrösse vorgegebenen Komfortband in der ersten Betriebsart (20) der Anordnung (2) ist, detektieren eines von einem Benutzer ausgelösten Ereignisses (22; 30), durch welches die Betriebsart der Anordnung (2) verändert wird, ermitteln (23; 31) eines zweiten Werts, der ein Mass für die Änderung der Ausnutzung der eingesetzten Energie zum Halten der Komfortgrösse in dem für die Komfortgrösse geltenden Komfortband in der veränderten Betriebsart (24; 32) der Anordnung (2) umfasst, ermitteln (23; 31) eines Vergleichswerts, durch den ein Verhältnis zwischen dem ersten Wert und dem zweiten Wert quantifizierbar ist, und, auswerten (23; 31) des Vergleichswerts und entsprechendes Aktualisieren (23; 31) eines Hinweises an den Benutzer bezüglich der aktuellen Ausnutzung der für die Komfortgrösse eingesetzten Energie. Mit dem Verfahren kann die Benutzerakzeptanz energieoptimierter Raumautomation wesentlich und messbar verbessert werden.

## Beschreibung

### Technisches Gebiet der Erfindung

Die Erfindung bezieht sich auf ein Verfahren zur Steuerung eines Raumautomationssystems zur Steuerung oder Regelung mindestens einer Raumkomfortgrösse in einem Gebäude.

Solche Verfahren eignen sich beispielsweise zum bedarfsgerechten Heizen, Kühlen, Lüften, Beleuchten und Beschatten von Räumen oder Raumzonen in Gebäuden und sind beispielhaft in einem Gebäudeautomationssystem implementiert.

Zum Heizen, Kühlen, Lüften und Beleuchten eines Gebäudes wird dazu geeignete Energie benötigt, deren Kosten einerseits direkt bei der Beschaffung, Aufbereitung oder Speicherung und andererseits bei der Beseitigung oder bei der Abgeltung von unerwünschten Nebeneffekten anfällt. Diese Energiekosten sind in der Regel zeitabhängig. So kann beispielsweise die Beschaffung eines Brennstoffs in einem gewissen Zeitpunkt relativ kostengünstig sein. Beim Verbrennen des Brennstoffs jedoch können Gase und Partikel anfallen, die beispielsweise Steuern oder Abgaben an den Staat verursachen, oder die Kosten verursachend zu filtern sind, so dass dieser Brennstoff insgesamt zum Heizen keine kostengünstige Energieform ist. Typischerweise sind durch Fenster oder Gebäudehülle einstrahlende Sonnenwärme und durch Fenster einstrahlendes Sonnenlicht kostengünstige Energien, während mit Heizöl erzeugte Wärme oder mit Elektrizität erzeugte Kälte kostenintensive Energien sind. Ausserdem kann kostenintensive Energie aber auch bedeuten, dass der Verbrauch der entsprechenden Energie höhere Kosten verursacht, das heisst, dass eine schlechtere Wirtschaftlichkeit vorliegt. Grundsätzlich besteht der Wunsch, die Arbeitsweise eines Gebäudeautomationssystem so auszulegen, dass die Energiekosten für einen gewissen im Gebäude gewünschten Komfort bezüglich Temperatur, Luftqualität und Beleuchtung über einen längeren Zeithorizont möglichst minimiert werden.

### Stand der Technik

Verfahren und Anordnungen zum Steuern und/oder zum Regeln von Raumkomfortgrössen wie Temperatur, Luftfeuchte, Luftqualität und Beleuchtungsstärke in einem Gebäude sind in einer Vielzahl von Varianten bekannt.

Derartige Verfahren sind beispielsweise aus den Offenlegungsschriften EP 1 074 900A, WO2007/042371A und WO2007/096377A bekannt, in denen vorgeschlagen wird, eine modellprädiktive Einrichtung einzusetzen um für einen gewissen Raumkomfort den Energieverbrauch oder die Energiekosten zu optimieren.

Ferner wird in W02009/124217A ein adaptives Gebäudeautomationssystem offenbart, durch welches Luftqualität, Beleuchtungskörper und Jalousien optimal steuer- und/oder regelbar sind.

Bekannte Arbeitsweisen von Gebäudeautomationssystemen, durch welche typischerweise Temperatur, Luftqualität und Beleuchtungsstärke in Räumen für einen minimierten Energieverbrauch geregelt oder gesteuert werden, erfordern auch eine von einer Raumbelegung abhängige optimale Koordination beim Einsatz von Heiz- und Kühlkreisen, Wärme- und Kältespeichern, Umluft, Aussenluft, künstlichen Beleuchtungskörpern und Tageslicht. Im Rahmen einer optimalen Koordination werden beispielsweise Rollläden oder Jalousien entsprechend einem zulässigen oder erwünschten, richtungsabhängigen Wärme- oder Lichtstrom positioniert, was für Benützer eines Gebäudes mit Nachteilen verbunden sein kann, da beispielsweise geschlossene Rollläden oder Lamellen die Sicht aus einem Fenster beeinträchtigen. Ferner kann durch ein offenes Fenster einerseits einem Raum genügend frische Aussenluft zugeführt werden, andrerseits kann aber dabei, je nach herrschender Aussentemperatur, die Raumtemperatur ungünstig beeinflusst werden. Je nach Befindlichkeit eines Benutzers kann es für diesen wünschenswert sein, im Winter den vorgegebenen Sollwert in einem von ihm belegten Raum zu erhöhen, beziehungsweise im Sommer den Sollwert tiefer zu setzen, was jeweils in der Regel mit erhöhtem Energiebedarf und damit mit Mehrkosten verbunden ist. Grundsätzlich erfordert die für minimale Energiekosten optimierte Arbeitsweise eines Gebäudeautomationssystems von den Benützern eines Gebäudes eine hohe Akzeptanz.

### Technische Aufgabe der Erfindung und Lösung

Der Erfindung liegt die Aufgabe zugrunde, ein Verfahren zur Steuerung eines Raumautomationssystems anzugeben, durch welches die Benutzerakzeptanz eines Verfahrens zur Optimierung des für einen gewissen Komfort erforderlichen Energiebedarfs wesentlich verbessert werden kann. Das Verfahren soll im Gebäudeautomationssystem implementierbar und durch dessen Funktionalität selbsttätig durchführbar sein.

Die genannte Aufgabe wird erfindungsgemäss durch die Merkmale des Anspruchs 1 gelöst. Vorteilhafte Ausgestaltungen ergeben sich aus den abhängigen Ansprüchen.

Nachfolgend werden Ausführungsbeispiele der Erfindung mit Hilfe von Zeichnungen näher erläutert.

### Angaben zu den Zeichnungen

Es zeigen:
Fig. 1 eine schematische Darstellung eines Raumes mit Geräten für eine integrierte Raumautomation, und
Fig. 2 ein Diagramm zur Wirkungsweise eines Verfahrens gemäss der Erfindung.

### Detaillierte Beschreibung der Erfindung

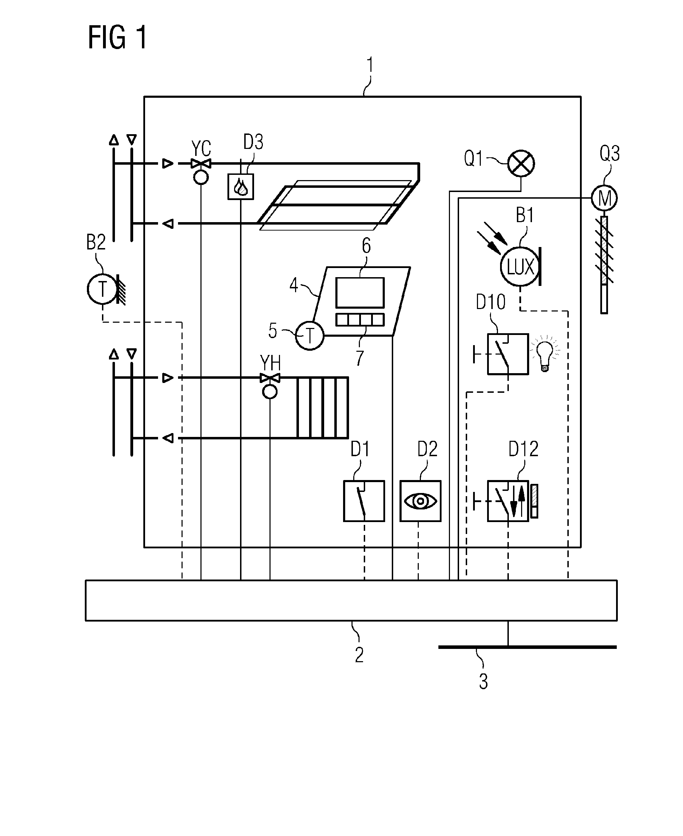

In der Fig. 1 bezeichnet 1 einen Raum oder eine Raumzone in einem Gebäude. Zu den steuer- oder regelbare Komfortgrössen im Raum 1 gehört mindestens die Raumtemperatur und bei Bedarf ausserdem beispielsweise die Luftfeuchte, die Luftqualität und die Beleuchtungsstärke. Die steuer- oder regelbare Komfortgrössen werden mit Hilfe einer Steuer- und Regelanordnung 2 durch entsprechendes Steuern und/oder Regeln mit optimiertem Energieaufwand in einem der jeweiligen Komfortgrösse zugeordneten Komfortband gehalten. Die Steuer- und Regelanordnung 2 ist Teil eines Gebäudeautomationssystems und über ein Bussystem 3 mit weiteren Komponenten des Gebäudeautomationssystems verbunden.

Zur Steuerung und/oder Regelung der Komfortgrössen im Raum 1 umfasst das Gebäudeautomationssystem beispielhaft ein Heizungs-, ein Kühlungs-, ein Lüftungs-, ein Beleuchtungs- und ein Beschattungssystem. Das in der Fig. 1 dargestellte Beispiel einer integrierten Raumautomation umfasst lediglich ein Minimum an Gewerken zur Darstellung des Prinzips der Erfindung. Das vorgestellte Verfahren zur optimierten Steuerung und Regelung von Raumkomfortgrössen ist grundsätzlich ohne weiteres anwendbar, auch wenn mehr oder weniger Gewerke eingesetzt werden. Der Begriff Gewerk umfasst hier die Gesamtheit der Geräte, Installationen und Mittel der zur Erreichung eines angestrebten Raumkomforts vorhandenen und einsetzbaren Energiekreise zum Heizen, Kühlen, Lüften und Beleuchten.

Die im Raum 1 beispielhaft angeordneten Geräte sind ein Raumgerät 4, ein Lichtsensor B1 zur Messung der Beleuchtungsstärke, ein Fensterschalter D1, ein Präsenzmelder D2, eine Bedieneinheit D12 zum manuellen Bedienen oder Steuern von Jalousien oder Jalousieantrieben Q3, eine weitere Bedieneinheit D10 zum indirekten Schalten oder Steuern von Leuchtkörpern Q1, ein durch die Steuer- und Regelanordnung 2 steuerbares Heizventil YH eines Heizkreises, und ein durch die Steuer- und Regelanordnung 2 steuerbares Kühlventil YC sowie ein Taupunktfühler D3 eines Kühlkreises. Ein Temperatursensor 5 zum Messen der Temperatur im Raum 1 ist beispielsweise im Raumgerät 4 angeordnet, welches eine Benutzerschnittstelle, beispielsweise eine Anzeigeeinheit 6 und Eingabeelemente 7, aufweist

Ausserhalb des Gebäudes ist ein Aussentemperaturfühler B2 angeordnet. Die Gewerke sind mit der Steuer- und Regelanordnung 2 über Datenkommunikationskanäle verbunden. Die Datenkommunikationskanäle sind in bekannter Art drahtlos oder drahtgebunden realisiert. Bei Bedarf können Gewerke auch über die Steuer- und Regelanordnung 2 elektrisch versorgt werden. Der Kühlkreis umfasst hier eine Kühldecke, welche mindestens zeitweise mit kostengünstiger Energie - beispielsweise mittels Kühlturm - betreibbar ist. Das Gebäude umfasst typischerweise eine Vielzahl von Räumen oder Raumzonen.

Die mit der Steuer- und Regelanordnung 2 steuer- oder regelbaren Raumklimagrössen sind typischerweise mindestens die Raumtemperatur T_{R1} des Raums 1 und je nach Bedarf weitere dem Komfort im Raum 1 dienende Grössen, wie beispielsweise die Beleuchtungsstärke, die Luftfeuchte, der Kohlendioxydgehalt oder der Anteil an flüchtigen organischen Verbindungen (Volatile Organic Compounds VOC) in der Raumluft.

In einer Variante wird durch die Steuer- und Regelanordnung 2 mit Hilfe eines Ausgangssignals des Lichtsensors B1 und eines weiteren Signals des Präsenzmelders D2 die Beleuchtung im Raum 1 durch entsprechendes Ansteuern der im Raum 1 angeordneten Leuchtkörpers Q1 vorteilhafterweise so geregelt, dass an bestimmten Orten im Raum 1 die Beleuchtungsstärke dann in einem vorbestimmten Komfortband liegt, sofern der Präsenzmelder eine Anwesenheit von Personen im Raum 1 detektiert.

In einer weiteren Variante sind mit der Steuer- und Regelanordnung 2 auch eine Positionierung oder Strahlungsdurchlässigkeit der an Fenstern des Raums 8 bzw. 9 wirksamen Beschattungseinrichtung steuer- und/oder regelbar. Die Beschattungseinrichtung kann beispielsweise durch Jalousien, Rollläden, Blenden oder Lamellen verwirklicht sein. Eine weitere Variante zur Realisierung der Beschattungseinrichtung ist die Verwendung von Fenstern mit elektrisch schaltbarer Tönung oder mit integrierten elektrisch schaltbaren Mikrospiegeln.

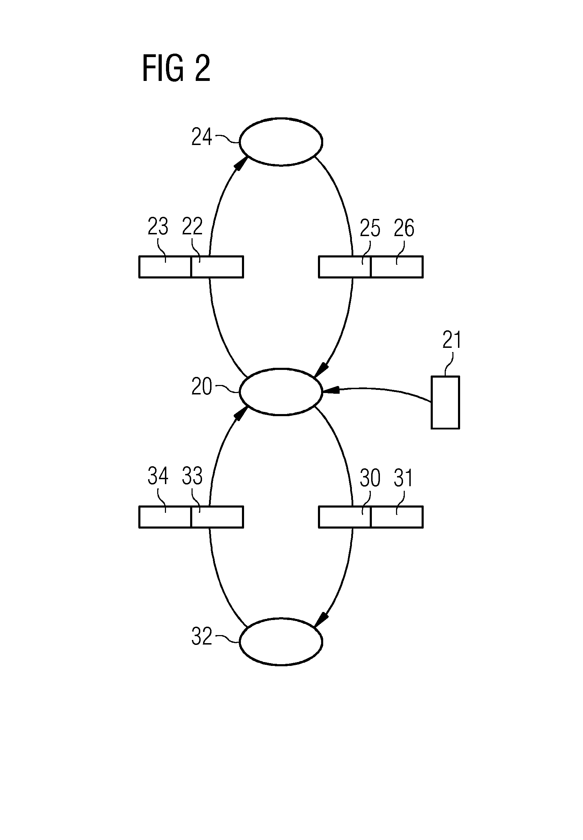

In der Fig. 2 ist das prinzipielle Verhalten eines gemäss vorliegender Erfindung steuerbaren Raumautomationssystems dargestellt. Das Verhalten wird im Folgenden anhand eines konkreten Beispiels näher erläutert. Im Beispiel wird die Temperatur im Raum 1 (Fig. 1) und die Beleuchtungsstärke eines Arbeitsplatzes im Raum 1 mit möglichst geringem Energieaufwand durch die Steuer- und Regelanordnung 2 grundsätzlich auf einem vorgegebenen Komfortniveau betrieben. Aufgrund der vorgesehenen Raumnutzung sind also vorteilhafterweise ein Komfortband für die Temperatur und ein weiteres Komfortband für die Beleuchtungsstärke vorgegeben. Im Beispiel liegt das Komfortband für die Temperatur zwischen einem unteren Grenzwert von 20 °C und einem oberen Grenzwert von 25 °C und das Komfortband für die Beleuchtungsstärke zwischen einem unteren Grenzwert von 300 Lux und einem oberen Grenzwert von 1000 Lux.

Mit 20 ist eine erste Betriebsart der Steuer- und Regelanordnung 2 bezeichnet. In der ersten Betriebsart 20 werden die Temperatur und die Beleuchtungsstärke im Raum 1 durch die Steuer- und Regelanordnung 2 in den vorgegebenen Komfortbändern gehalten. In der ersten Betriebsart arbeitet die Steuer- und Regelanordnung 2 selbsttätig so, dass nach einem vorgegebenen Ziel optimiert wird. Typischerweise ist das vorgegebene Ziel eine gute Ausnutzung verfügbarer Energie, also die Minimierung der Energiekosten zur Erreichung des vorgegebenen Komforts.

Beim Ausführen einer Initialisierungsroutine 21 - beispielsweise in einer Phase des Aufstartens oder Zurücksetzens des Raumautomationssystems - wird die Steuer- und Regelanordnung 2 selbsttätig in die erste Betriebsart 20 gesetzt.

Zur Erreichung des verlangten Komforts und des vorgegebenen Optimierungsziels werden in der ersten Betriebsart 20 erforderliche Stell- oder Steuersignale für das Heizventil YH, das Kühlventil YC, den Jalousieantrieb Q3 und den Leuchtkörper Q1 durch die Steuer- und Regelanordnung 2 unter optimaler Koordination der Gewerke selbsttätig generiert. Im Rahmen der optimalen Koordination werden beispielsweise die Jalousien oder Rollläden entsprechend einem zulässigen oder erwünschten, richtungsabhängigen Wärme- oder Lichtstrom positioniert.

Nach dem Ausführen der Initialisierungsroutine 21 arbeitet die Steuer- und Regelanordnung 2 vorteilhafterweise bis zu einem Eingriff eines Benutzers in der ersten Betriebsart 20.

Neben den zur Erreichung des verlangten Komforts notwendigen Ansteuerung des Heizventils YH, des Kühlventils YC, des Jalousieantriebs Q3 und des Leuchtkörpers Q1 werden durch die Steuer- und Regelanordnung 2 folgende Verfahrensschritte durchgeführt:
Ein erster Verfahrensschritt, in dem ein erster Wert ermittelt wird, der ein Mass für die Ausnutzung der eingesetzten Energie zum Halten der Temperatur und der Beleuchtungsstärke im Raum 1 in den in der ersten Betriebsart 20 für die Temperatur und die Beleuchtungsstärke vorgegebenen Komfortbändern.

Ein zweiter Verfahrensschritt, in dem Bedienelemente derart überwacht werden, dass ein von einem Benutzer ausgelöstes Ereignis detektiert wird, durch welches die Betriebsart der Anordnung verändert wird. Im vorliegenden Beispiel werden also vorteilhafterweise die in Raum 1 manuell bedienbaren Steuerelemente überwacht, nämlich Eingabeelemente 7 des Raumgeräts 4, die Bedieneinheit D10 zur manuellen Steuerung der Leuchtkörper, die Bedieneinheit D12 für die manuelle Steuerung von Rolläden oder Jalousien und der Fensterschalter D1.

Ein dritter Verfahrensschritt, in dem ein zweiter Wert ermittelt wird, der ein Mass für die Änderung der Ausnutzung der eingesetzten Energie zum Halten der Komfortgrösse in dem für die Komfortgrösse geltenden Komfortband in der veränderten Betriebsart der Anordnung umfasst.

Ein vierter Verfahrensschritt, in dem ein Vergleichswert ermittelt wird, durch den ein Verhältnis zwischen dem ersten Wert und dem zweiten Wert quantifiziert wird.

Ein fünfter Verfahrensschritt, in dem der Vergleichswert ausgewertet und ein Hinweis an den Benutzer bezüglich der aktuellen Ausnutzung der für die Komfortgrösse eingesetzten Energie entsprechend der Auswertung des Vergleichswerts aktualisiert wird. Der Hinweis erfolgt beispielsweise über die Anzeigeeinheit 6.

Nach dem fünften Verfahrensschritt wird der Benutzer mit Vorteil über eine entsprechende Benutzerschnittstelle, beispielsweise über die Anzeigeeinheit 6 aufgefordert, das von ihm ausgelöste Ereignis beispielsweise über die Eingabeelemente zu quittieren oder allenfalls rückgängig zu machen.

Durch das im zweiten Verfahrensschritt durch die Steuer- und Regelanordnung 2 durchgeführt Überwachen ist ein erstes Ereignis 22 detektierbar, wenn beispielsweise ein Benutzer während einer Heizperiode mittels der Eingabeelemente 7 den unteren Grenzwert des Komfortbandes für die Temperatur von den vorgegebenen 20 °C auf 22 °C erhöht. In einem auf das erste Ereignis 22 durchgeführten ersten Prozess 23 werden der dritte Verfahrensschritt, der vierte Verfahrensschritt und der fünfte Verfahrensschritt durchgeführt, wobei der Hinweis an den Benutzer beispielhaft an der Anzeigeeinheit 6 ausgegeben wird. Mit Vorteil wird der erste Prozess 23 abgeschlossen und dabei in eine zweite Betriebsart 24 gewechselt. In der zweiten Betriebsart 24 wird vorteilhafterweise eine gewisse Zeitspanne lang auf eine Bestätigung seitens des Benutzers gewartet, ob der untere Grenzwert des Komfortbandes tatsächlich auch auf Kosten der erwarteten Verminderung der Energieeffizienz auf 22 °C zu erhöhen sei. Mit 25 ist ein zweites Ereignis bezeichnet, welches entweder dem Ablauf der Zeitspanne für eine Bestätigung oder einem Verwerfen der Temperaturerhöhung seitens des Benutzer entspricht. In einem auf das zweite Ereignis 25 durchgeführten zweiten Prozess 26 wird die Steuer- und Regelanordnung in die erste Betriebsart 20 gesetzt.

Durch das im zweiten Verfahrensschritt durch die Steuer- und Regelanordnung 2 durchgeführt Überwachen ist ein drittes Ereignis 30 detektierbar, wenn beispielsweise ein Benutzer während einer Kühlperiode mittels der Bedieneinheit 12 die von der Steuer- und Regelanordnung 2 in eine die Sonneneinstrahlung abschirmende Position gehaltenen Rolläden mittels der Bedieneinheit D12 manuell öffnet, so dass ein Durchfluss im Kühlventil YC zu erhöhen ist. In einem auf das dritte Ereignis 30 durchgeführten dritten Prozess 31 werden der dritte Verfahrensschritt, der vierte Verfahrensschritt und der fünfte Verfahrensschritt durchgeführt, wobei der Hinweis an den Benutzer beispielhaft an der Anzeigeeinheit 6 ausgegeben wird. Mit Vorteil wird der dritte Prozess 31 abgeschlossen und dabei in eine dritte Betriebsart 32 gewechselt. In der dritten Betriebsart 32 wird vorteilhafterweise eine gewisse Zeitspanne lang auf eine Bestätigung seitens des Benutzers gewartet, ob die Rolläden tatsächlich auch auf Kosten der erwarteten Verminderung der Energieeffizienz offen bleiben sollen. Mit 33 ist ein viertes Ereignis bezeichnet, welches entweder dem Ablauf der Zeitspanne für eine Bestätigung oder einem Verwerfen der vorgenommenen Manipulation seitens des Benutzer entspricht. In einem auf das vierte Ereignis 33 durchgeführten vierten Prozess 34 werden die Rollläden selbsttätig in die optimale Position zurückgesetzt und die Steuer- und Regelanordnung in die erste Betriebsart 20 gesetzt.

Durch das im zweiten Verfahrensschritt durch die Steuer- und Regelanordnung 2 durchgeführte Überwachen sind vorteilhafterweise alle von einem Benutzer auslösbaren Ereignisse detektierbar, durch welche die Energieeffizient des Raumautomationssystem wesentlich beeinflusst werden könnte, neben den bereits erwähnten Ereignissen also beispielsweise auch ein Öffnen eines Fensters, indem der entsprechende Fensterschalter D1 überwacht wird, oder ein Verändern von Zeitintervallen, in denen ein reduzierter Komfort, beispielsweise ein Absenken der Raumtemperatur in der Nacht, oder erhöhter Komfort vorgesehen ist, indem die Eingabeelemente 7 des Raumgeräts 4 überwacht werden.

Das vorgestellte Verfahren ist in seiner Wirkung erweiterbar, indem beispielsweise die Ausnutzung der Energie bezogen auf den Raum 1 über einen gewissen Zeitraum als Bonus-Malus-System aufdatiert wird. Ein Benutzer des Raums 1 kann sich beispielsweise einen Bonus erwirken, wenn er in einer Heizperiode eine für die Temperatur vorgegebene untere Grenze des Komfortbandes tiefer setzt, oder entsprechend in einer Kühlperiode eine für die Temperatur vorgegebene obere Grenze des Komfortbandes höher setzt.

### Bezugszeichen

- 1: Raum oder Raumzone
- 2: Steuer- und Regelanordnung
- 3: Bussystem
- 4: Raumgerät
- 5: Temperatursensor
- 6: Anzeigeeinheit
- 7: Eingabeelemente

- 20: Betriebsart, erste
- 21: Initialisierungsroutine
- 22: Ereignis, erstes
- 23: Prozess, erster
- 24: Betriebsart, zweite
- 25: Ereignis, zweites
- 26: Prozess, zweiter

- 30: Ereignis, drittes
- 31: Prozess, dritter
- 32: Betriebsart, dritte
- 33: Ereignis, viertes
- 34: Prozess, vierter

- B1: Lichtsensor
- D1: Fensterschalter
- D2: Präsenzmelder
- D12: Bedieneinheit (für Jalousie)
- Q3: Jalousieantrieb
- D10: Bedieneinheit, weitere (für Leuchtkörper)
- Q1: Leuchtkörper
- YH: Heizventil
- YC: Kühlventil
- D3: Taupunktfühler
- B2: Aussentemperaturfühler

## Patentansprüche

1. Verfahren zur Steuerung eines Raumautomationssystems, mit einer Anordnung (2) zum Steuern oder Regeln mindestens einer Komfortgrösse in einem Raum (1) oder in einer Raumzone,
wobei die Anordnung (2) wenigstens in zwei Betriebsarten (20; 24; 32) lauffähig ist, in einer ersten Betriebsart (20) eine Komfortgrösse selbsttätig bei optimiertem Energieverbrauch in einem vorgegebenen, der Komfortgrösse zugeordneten Komfortband gehalten wird und in einer weiteren Betriebsart (24; 32) Aussagen bezüglich des aktuellen Energieverbrauchs bei dem aktuell im Raum (1) oder in der Raumzone geltenden Zustand generiert werden,
mit den Verfahrensschritten:
ermitteln eines ersten Werts, der ein Mass für die Ausnutzung der eingesetzten Energie zum Halten der Komfortgrösse in dem für die Komfortgrösse vorgegebenen Komfortband in der ersten Betriebsart (20) der Anordnung (2) ist,
detektieren eines von einem Benutzer ausgelösten Ereignisses (22; 30), durch welches die Betriebsart der Anordnung (2) verändert wird,
ermitteln (23; 31) eines zweiten Werts, der ein Mass für die Änderung der Ausnutzung der eingesetzten Energie zum Halten der Komfortgrösse in dem für die Komfortgrösse geltenden Komfortband in der veränderten Betriebsart (24; 32) der Anordnung (2) umfasst,
ermitteln (23; 31) eines Vergleichswerts, durch den ein Verhältnis zwischen dem ersten Wert und dem zweiten Wert quantifizierbar ist, und,
auswerten (23; 31) des Vergleichswerts und entsprechendes Aktualisieren (23; 31) eines Hinweises an den Benutzer bezüglich der aktuellen Ausnutzung der für die Komfortgrösse eingesetzten Energie.

2. Verfahren nach Anspruch 1, **dadurch gekennzeichnet,**
**dass** die Komfortgrösse die von einem im Raum (1) angeordneten Temperatursensor (5) erfassbare Raumtemperatur ist.

3. Verfahren nach Anspruch 2, **dadurch gekennzeichnet,**
**dass** eine weitere Komfortgrösse die von einem im Raum 1 angeordneten Lichtsensor (B1) erfassbare Beleuchtungsstärke ist.

4. Verfahren nach einem vorangehenden Anspruch, **dadurch gekennzeichnet,**
**dass** das von einem Benutzer ausgelöste Ereignis, durch welches die Betriebsart (20) der Anordnung (2) verändert wird, ein Verändern (22) eines Komfortbandes ist.

5. Verfahren nach einem vorangehenden Anspruch, **dadurch gekennzeichnet,**
**dass** das von einem Benutzer ausgelöste Ereignis, durch welches die Betriebsart (20) der Anordnung (2) verändert wird, das Schalten eines Fensterschalters (D1) ist.

6. Verfahren nach einem vorangehenden Anspruch, **dadurch gekennzeichnet,**
**dass** das von einem Benutzer ausgelöste Ereignis, durch welches die Betriebsart (20) der Anordnung (2) verändert wird, das Betätigen (30) einer Bedieneinheit (D10) für Rollläden, Jalousien oder eine Einrichtung zur Veränderung der spektralen Durchlässigkeit eines Fensters ist.

7. Verfahren nach einem vorangehenden Anspruch, **dadurch gekennzeichnet,**
**dass** das von einem Benutzer ausgelöste Ereignis, durch welches die Betriebsart (20) der Anordnung verändert wird, ein Verändern (7) der für den Raum (1) vorgesehenen Belegungszeit ist.

8. Verfahren nach einem vorangehenden Anspruch, **dadurch gekennzeichnet,**
**dass** der Hinweis an den Benutzer, an einer Anzeigeeinheit (6) eine Raumgeräts (4) dargestellt wird.

9. Verfahren nach einem vorangehenden Anspruch, **dadurch gekennzeichnet,**
**dass** die Ausnutzung der Energie bezogen auf den Raum (1) über einen gewissen Zeitraum als Bonus-Malus-System aufdatiert wird.
